# EUROPEAN PATENT APPLICATION

(11) **EP 3 916 629 A1**
(43) Date of publication of application: **01.12.2021**
(21) Application number: 20919395.2
(22) Date of filing: 12.11.2020
(51) Int. Cl.: G06K 9/00

(54) **METHOD, APPARATUS AND DEVICE FOR IDENTIFYING ILLEGAL BUILDING, AND STORAGE MEDIUM**

(30) Priority: 27.03.2020 CN 202010231088
(71) Applicant: Beijing Baidu Netcom Science and Technology Co., Ltd., Beijing 100085 (CN)
(72) Inventor: WANG, Guanhao, Beijing 10085 (CN); YE, Zhi, Beijing 10085 (CN)
(74) Representative: Regimbeau
(86) International application number: PCT/CN2020/128257
(87) International publication number: WO 2021/189870

(57) **Abstract**

Provided are an illegal building identification method and apparatus, a device, and a storage medium, which relate to the field of cloud computing. The specific implementation scheme is: acquiring a target image and a reference image associated with the target image; extracting a target building feature of the target image and a reference building feature of the reference image, respectively; and determining, according to the target building feature and the reference building feature, an illegal building identification result of the target image. In the embodiment of the present application, the reference image associated with the target image is acquired, the target image and the reference image are bonded to each other, and feature extraction is performed on the bonded images, so as to perform illegal building identification on the target image based on the building feature of the reference image, thereby achieving the illegal building automatic identification and reducing the data throughput in the process of illegal building identification. Meanwhile, based on the siamese idea, building feature extraction is performed on the target image and the reference image, and then illegal building identification is performed according to the extracted building feature, thereby improving the accuracy of identification results.

## Description

This application claims priority to a Chinese Patent Application No. 202010231088.3 filed with the CNIPA on Mar. 27, 2020, the disclosure of which is incorporated herein by reference in its entirety.

### TECHNICAL FIELD

The present application relates to image processing technologies, for example, the field of cloud computing, and specifically, to an illegal building identification method and apparatus, a device, and a storage medium.

### BACKGROUND

In the urban construction, illegal buildings have become the focus of attention in the term of urban appearance destruction. Meanwhile, illegal buildings also pose a greater threat to the life safety of humans.

At present, illegal building detection is usually carried out in the manner of options of the urban management department. However, the above-mentioned manner requires the investment of a lot of labor costs, and such a manner relying on manual inspection is inefficient, which can easily cause missing detection.

### SUMMARY

The following is a summary of the subject matter described in detail herein. This summary is not intended to limit the scope of the claims.

Embodiments of the present application provide an illegal building identification method and apparatus, a device, and a storage medium to achieve illegal building automatic identification, thereby reducing the identification cost, and improving the identification efficiency.

In a first aspect, an embodiment of the present application provides an illegal building identification method. The method includes the steps described below.

A target image and a reference image associated with the target image are acquired.

A target building feature of the target image and a reference building feature of the reference image are extracted, respectively.

An illegal building identification result of the target image is determined according to the target building feature and the reference building feature.

In the present application, a target image and a reference image associated with the target image are acquired, a target building feature of the target image and a reference building feature of the reference image are extracted, respectively, and an illegal building identification result of the target image is determined according to the target building feature and the reference building feature. In the preceding technical scheme, the reference image associated with the target image is acquired, the target image and the reference image are bonded to each other, and feature extraction is performed on the bonded images, so as to perform illegal building identification on the target image based on the building feature of the reference image, thereby achieving the illegal building automatic identification and reducing the data throughput in the process of illegal building identification. Meanwhile, based on the siamese idea, building feature extraction is performed on the target image and the reference image, and then illegal building identification is performed according to the extracted building feature, thereby improving the accuracy of identification results.

In an embodiment, a distance difference between an acquisition position of the target image and an acquisition position of the reference image is less than a set distance threshold; or an angle difference between an acquisition angle of the target image and an acquisition angle of the reference image is less than a set angle threshold; or a distance difference between an acquisition position of the target image and an acquisition position of the reference image is less than a set distance threshold and an angle difference between an acquisition angle of the target image and an acquisition angle of the reference image is less than a set angle threshold.

In an optional implementation of the preceding application, the distance difference between the acquisition position of the target image and the acquisition position of the reference image, or the angle difference between the acquisition angle of the target image and the acquisition angle of the reference image, or the distance difference between the acquisition position of the target image and the acquisition position of the reference image and the angle difference between the acquisition angle of the target image and the acquisition angle of the reference image are limited so that the bonding of the target image and the reference image is achieved and the case in which illegal building identification is performed on the target image based on multiple reference images is avoided, thereby reducing the amount of the data operations.

In an embodiment, the step in which target building feature of the target image and reference building feature of the reference image associated with the target image are extracted, respectively, includes the steps described below.

A target basis feature of the target image and a reference basis feature of the reference image associated with the target image are extracted, respectively.

Feature extraction is performed, at each of at least two set scales, on the target basis feature and the reference basis feature, respectively, to obtain a target building feature and a reference building feature at each of the at least two scales.

In an optional implementation of the preceding application, the building feature extraction process is refined into the basis feature extraction and the feature extraction is further performed on basis features at at least two scales so that the detailed features of the images at different scales can be obtained and then the illegal building identification is performed based on the building features at at least two scales, thereby improving the accuracy of the identification results.

In an embodiment, the step in which an illegal building identification result of the target image is determined according to the target building feature and the reference building feature includes the steps described below.

Feature fusion is performed on the target building feature and the reference building feature at each of the at least two scales.

The illegal building identification result of the target image is determined according to feature fusion results at the at least two scales.

In an optional implementation of the preceding application, the illegal building identification result determination process is refined into the fusion of building features at each scale and the illegal building identification is performed according to the feature contents and results at at least two scales, thereby perfecting the illegal building identification mechanism at multiple scales.

In an embodiment, the step in which feature fusion is performed on the target building feature and the reference building feature at each of the at least two scales includes the step described below.

A difference between the target building feature and the reference building feature under each of the at least two scales is calculated, and the difference is taken as a feature fusion result under the each of the at least two scales.

In an optional implementation of the preceding application, the feature fusion process is refined into the operation of taking the difference between the target building feature and the reference building feature at each scale as the feature fusion result, thereby perfecting the feature fusion mechanism.

In an embodiment, the step in which a target basis feature of the target image and a reference basis feature of the reference image associated with the target image are extracted respectively includes the step described below.

The target basis feature of the target image and the reference basis feature of the reference image associated with the target image are extracted based on a deep residual network, respectively.

In an optional implementation of the preceding application, the basis feature extraction process is refined into the basis feature extraction based on the deep residual network, thereby perfecting the feature extraction manner and improving the accuracy of the feature extraction results.

In an embodiment, before the reference building feature of the reference image is extracted, the method further includes the step described below.

Coordinate transform is performed on the reference image according to the target image.

The coordinate transform includes at least one of shrinking transform, stretching transform, rotation transform or translation transform.

In an optional embodiment of the preceding application, before the feature extraction is performed on the reference image, at least one of shrinking transform, stretching transform, rotation transform or translation transform is performed on the reference image according to the target image so that the coordinates of the transformed image match with the coordinates of the target image, thereby providing a guarantee for the accuracy of the illegal building identification results.

In an embodiment, the step in which coordinate transform is performed on the reference image according to the target image includes the steps described below.

Target key points and target descriptors of the target image and reference key points and reference descriptors of the reference image are extracted, respectively.

A matching operation is performed on the target key points and the reference key points according to the target descriptors and the reference descriptors.

A transform matrix is determined according to a matching result, and the coordinate transform is performed on the reference image according to the transform matrix.

In an optional implementation of the preceding application, the process of changing the coordinates of the reference image is refined into the operations of extracting key points and descriptors from the target image and the reference image, performing the key point matching according to the matching situation of the descriptors of the target image and the descriptors of the reference image, determining the transform matrix according to the matching result of key points, and then changing the coordinates of the reference image according to the determined transform matrix, thereby perfecting the processing mechanism of coordinate transform of the reference image and thus providing a guarantee for the accuracy of illegal building identification results.

In an embodiment, the step in which an illegal building identification result of the target image is determined includes the steps described below.

Whether the target image includes an illegal building area is determined.

If the target image includes the illegal building area, position coordinates of the illegal building area are determined.

In an optional implementation of the preceding application, the illegal building identification result determination process is refined into the operations of performing dichotomous classification on the building area in the target image and detecting the position coordinates of the illegal building area when the building area includes the illegal building area, thereby enriching the content of the illegal building identification result.

In a second aspect, an embodiment of the present application further provides an illegal building identification apparatus. The apparatus includes an image acquisition module, a building feature extraction module, and an identification result determination module.

The image acquisition module is configured to acquire a target image and a reference image associated with the target image.

The building feature extraction module is configured to extract a target building feature of the target image and a reference building feature of the reference image, respectively.

The identification result determination module is configured to determine, according to the target building feature and the reference building feature, an illegal building identification result of the target image.

In a third aspect, an embodiment of the present application further provides an electronic device. The electronic device includes: at least one processor, and a memory communicatively connected to the at least one processor.

The memory has instructions executable by the at least one processor stored thereon, where the instructions are executed by the at least one processor to cause the at least one processor to perform the illegal building identification method provided in the embodiment described in the first aspect.

In a fourth aspect, an embodiment of the present application further provides a non-transitory computer-readable storage medium having computer instructions stored thereon, where the computer instructions are configured to cause a computer to perform the illegal building identification method provided in the embodiment described in the first aspect.

Other effects of the preceding optional implementations are described hereinafter in connection with embodiments.

After reading and understanding the drawings and detailed description, other aspects can be understood.

### BRIEF DESCRIPTION OF DRAWINGS

The drawings are intended to provide a better understanding of the scheme of the present application and not to limit the present application. In the drawings:
FIG. 1 is a flowchart of an illegal building identification method according to Embodiment one of the present application;
FIG. 2 is a flowchart of an illegal building identification method according to Embodiment two of the present application;
FIG. 3 is a flowchart of an illegal building identification method according to Embodiment three of the present application;
FIG. 4A is a flowchart of an illegal building identification method according to Embodiment four of the present application;
FIG. 4B is a structure block diagram of an image matching process according to Embodiment four of the present application;
FIG. 4C is a schematic diagram of a reference image according to Embodiment four of the present application;
FIG. 4D is a schematic diagram of a target image according to Embodiment four of the present application;
FIG. 4E is a schematic diagram of a transformed reference image according to Embodiment four of the present application;
FIG. 4F is a structure block diagram of an image detection process according to Embodiment four of the present application;
FIG. 4G is a schematic diagram of a target image marking result according to Embodiment four of the present application;
FIG. 5 is a structure diagram of an illegal building identification apparatus according to Embodiment five of the present application; and
FIG. 6 is a block diagram of an electronic device for implementing a data access method in an embodiment of the present application.

### DETAILED DESCRIPTION

Exemplary embodiments of the present application, including details of embodiments of the present application, are described hereinafter in conjunction with the drawings to facilitate understanding. The exemplary embodiments are merely illustrative. Therefore, it will be realized by those having ordinary skill in the art that various changes and modifications may be made to the embodiments described herein without departing from the scope and spirit of the present application. Similarly, description of well-known functions and constructions is omitted hereinafter for clarity and conciseness.

### Embodiment one

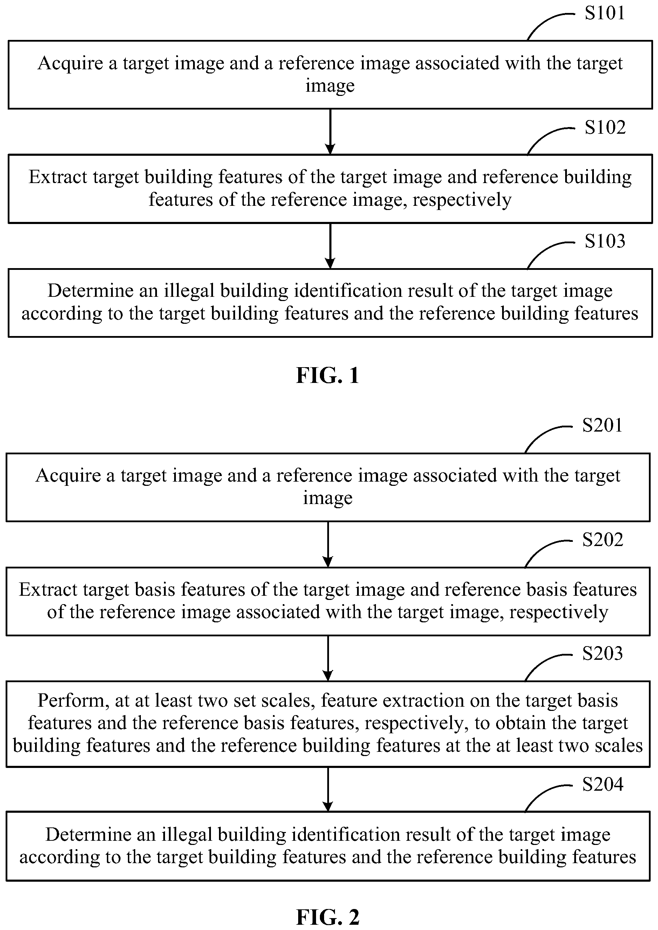

FIG. 1 is a flowchart of an illegal building identification method according to Embodiment one of the present application. The embodiment of the present application is applicable to the case of identifying illegal buildings in images. The method may be executed by an illegal building identification apparatus. The apparatus may be implemented by software, hardware or software and hardware and is specifically configured in an electronic device.

As shown in FIG. 1, the illegal building identification method includes the steps described below.

In step S101, a target image and a reference image associated with the target image are acquired.

The target image is an image on which illegal building identification is required to be performed. The reference image is a default image without illegal buildings. The target image and the reference image may be understood as images acquired at different times for exactly or approximately the same area, where the acquisition time of the reference image is earlier than the acquisition time of the target image.

It is to be understood that the reference image may be an image acquired at a set acquisition interval from the current acquisition time, and may also be an image acquired when the illegal building identification is performed for the first time. Of course, in order to avoid repeated detection, the reference image may also be replaced in real time or at regular intervals, which is not limited in the present application.

In order to ensure the consistency of the target image and the reference image and further improve the accuracy of the subsequently determined illegal building identification result, in an embodiment, the distance difference between the acquisition position of the acquired target image and the acquisition position of the reference image is less than a set distance threshold, so as to ensure that the acquisition positions of the target image and the reference figure are the same or approximate. Alternatively, in an embodiment, the angle difference between the acquisition angle of the acquired target image and the acquisition angle of the reference image is less than a set angle threshold, so as to ensure that the acquisition angles of the target image and the reference image are the same or approximate. The set distance threshold and the set angle threshold may be determined by technicians according to requirements or empirical values. The acquisition angle may be an image angle or a pitch angle of an acquisition device.

In order to ensure the comprehensiveness of building information contained in the image, the image is usually shot by using an unmanned aerial vehicle along a set patrol route and based on a set acquisition frequency. In order to distinguish the images of different acquisition areas, the acquired images may be sequentially numbered according to the acquisition sequence of the images. Accordingly, when the reference image is acquired, a reference image with the same image number as the target image is acquired. The acquisition frequency may be determined by technicians according to the acquisition requirements or the lens parameters of the unmanned aerial vehicle.

For example, the target image and the reference image associated with the target image may be stored in advance in the electronic device locally, another storage device associated with the electronic device or the cloud. When the illegal building identification is required to be performed, the target image and the reference image are acquired from the electronic device locally, another storage device associated with the electronic device or the cloud. In order to ensure the association relationship between the target images and the reference images, the target images and the reference images may be numbered respectively according to the image acquisition positions so that the target image and the reference image at the same acquisition position have the same number. Accordingly, when the target image and the reference image are acquired, the target image and the reference image with the same number are acquired.

For example, the target image may also be transmitted to the electronic device in real time when the acquisition device (such as an unmanned aerial vehicle) performs the target image acquisition. The reference image is stored in the electronic device locally, another storage device associated with the electronic device or the cloud. Accordingly, when the electronic device receives a target image acquired by the acquisition device in real time, a reference image associated with the target image is acquired from the electronic device locally, another storage device associated with the electronic device or the cloud.

In step S 102, target building features of the target image and reference building features of the reference image are extracted, respectively.

Since the building group in the target image is complex and diverse, and pedestrians and vehicles on the roads have a great influence on the building area, in order to improve the accuracy of the extracted building features, in an embodiment, the building features in the target image and the reference image are extracted through deep learning so that the extracted features can reflect the semantic information in the images and the extracted features are richer and more comprehensive.

It is to be understood that since the building feature extraction is performed on the entire image in the present application, the single building in the image does not need to be segmented, the feature extraction is performed based on the single building, thereby reducing the amount of computation in the feature extraction process. Meanwhile, in the case of dense distribution of buildings in the image, the single building is segmented, then the feature extraction is performed on the segmented single building, and at this point, the accuracy of the extracted features is low, which will affect the accuracy of the illegal building identification results of the final illegal building identification.

It is to be noted that when the illegal building identification is performed, a to-be-identified area is usually divided according to administrative regions such as townships and towns. Therefore, the number of image samples acquired in the to-be-identified area is limited. Due to the significant difference between different images, the target image and the reference image are bonded to each other to train a feature extraction model based on the siamese idea. Accordingly, when the feature extraction is performed by using the feature extraction model, the building feature extraction is performed on the target image and the reference image associated with the target image by using the same feature extraction model and model parameters, so as to ensure the consistency of the extracted building features.

In step S103, an illegal building identification result of the target image is determined according to the target building features and the reference building features.

For example, the step in which an illegal building identification result of the target image is determined according to the target building features and the reference building features may be that: feature fusion is performed on the target building features and the reference building features and the illegal building recognition result of the target image is determined according to fused features.

In an embodiment, a difference between the target building features and the reference building features may be calculated, and the resulting difference may be taken as the feature fusion result. It is to be understood that the feature fusion is performed by a manner of calculating the difference, which can highlight the fused building features corresponding to the dissimilar areas between the target image and the reference image. Accordingly, when the illegal building identification is performed by fusing building features, the accuracy of identification results can be significantly improved.

In an optional implementation of the embodiment of the present application, the step in which the illegal building identification result of the target image is determined may be that: the dichotomous classification is performed on the building area in the target image: classifying the building area into the presence of the illegal building and the absence of the illegal building. Accordingly, when the illegal building identification is performed on the target image, the classification result may be obtained based on a classification model and according to the fused building features obtained after the feature fusion of the target building features and the reference building features.

In another optional implementation of the embodiment of the present application, the step in which the illegal building identification result of the target image is determined may also be that: whether the target image includes an illegal building area is determined, and if the target image includes an illegal building area, position coordinates of the illegal building area are determined.

For example, the illegal building area in the target image is detected based on a detection model and according to the fused building features obtained after the feature fusion of the target building features and the reference building features, and the position coordinates of the illegal building area are determined.

In an embodiment, an identification loss function and a positioning loss function may be introduced in the detection model training process, and a network parameter in the detection model may be optimized and adjusted based on the identification loss function and the positioning deviation loss function. The identification loss function is set to characterize a deviation between a classification result outputted by the model and an actual classification result. The positioning loss function is set to characterize a deviation between position coordinates of the illegal building area outputted by the model and actual position coordinates of the illegal building area.

The illegal building area may be represented by circular areas or rectangular areas. When the illegal building area is represented by using a circular area, the position coordinates may include a center position and a circular radius. When the illegal building area is represented by using a rectangular area, the position coordinates include coordinates of one vertex of the rectangular area, a rectangle length value, and a rectangle width value; or, the position coordinates include coordinates of at least two vertexes, such as coordinates of two vertexes on a diagonal.

It is to be understood that in order to avoid the confusion of illegal building areas, a unified position coordinate determination manner is usually adopted. For example, the position coordinates include coordinates of the upper left vertex of the rectangular area, a rectangle length value, and a rectangle width value. Accordingly, with the upper left vertex as a starting point, one side of the rectangle is determined, which extends in a direction parallel to the length direction of the target image for a distance of the rectangle length value, and the other side of the rectangle is determined which extends in a direction parallel to the width direction of the target image for a distance of the rectangle width value, so as to determine the illegal building area.

In order to represent the illegal building area more intuitively, the illegal building area may be marked in the target image or the reference image according to the position coordinates of the illegal building area. In order to avoid the difference between the coordinates of the illegal building area and the coordinates of the illegal building area due to the different acquisition angles, the illegal building area is usually marked in the target image.

In the present application, a target image and a reference image associated with the target image are acquired, target building features of the target image and reference building features of the reference image are extracted, respectively, and an illegal building identification result of the target image is determined according to the target building features and the reference building features. In the preceding technical scheme, the reference image associated with the target image is acquired, the target image and the reference image are bonded to each other, and feature extraction is performed on the bonded images, so as to perform illegal building identification on the target image based on the building features of the reference image, thereby achieving the illegal building automatic identification and reducing the data throughput in the process of illegal building identification. Meanwhile, based on the siamese idea, building feature extraction is performed on the target image and reference image, and then illegal building identification is performed according to the extracted building features, thereby improving the accuracy of identification results.

### Embodiment two

FIG. 2 is a flowchart of an illegal building identification method according to Embodiment two of the present application. The embodiment of the present application is optimized on the basis of the technical schemes of the preceding embodiments.

In an embodiment, the operation of "extracting the target building features of the target image and the reference building features of the reference image associated with the target image, respectively" is refined to "extracting target basis features of the target image and reference basis features of the reference image associated with the target image, respectively; and performing, at each of at least two set scales, feature extraction on the target basis features and the reference basis features, respectively, to obtain the target building features and the reference building features at the at least two scales", so as to perfect the building feature extraction manner.

As shown in FIG. 2, the illegal building identification method includes the steps described below.

In step S101, a target image and a reference image associated with the target image are acquired.

In step S202, target basis features of the target image and reference basis features of the reference image associated with the target image are extracted, respectively.

For example, the target basis features of the target image and the reference basis features of the reference image associated with the target image are extracted based on a deep residual network, respectively. The network depth of the deep residual network may be determined according to empirical values or a large number of tests. For example, the network depth may be set to 50.

In step S203, at at least two set scales, feature extraction is performed on the target basis features and the reference basis features, respectively, to obtain the target building features and the reference building features at the at least two scales.

Since the features at different scales contain different dimensions of detail information, feature mining is further performed on the extracted basis features through at least two scales, thereby obtaining a feature map with stronger characterization ability and providing a guarantee for improving the identification accuracy of illegal building identification results.

The number of scales may be determined by technicians according to requirements or empirical values or determined according to a model training result during the model training process. For example, the number of scales may be set to 5.

For example, the feature extraction may be performed on the target basis features and the reference basis features at at least two set scales by using a feature pyramid model, respectively, to obtain the target building features and the building features at at least two scales.

In step S204, an illegal building identification result of the target image is determined according to the target building features and the reference building features.

Since the target building features and the reference building features both contain feature maps of different scales, the target building features and the reference building features at different scales are required to be fused when the illegal building identification is performed on the target image according to the target building features and the reference building features.

In an embodiment, the step in which an illegal building identification result of the target image is determined according to the target building features and the reference building features may be that: feature fusion is performed on the target building features and the reference building features at each scale and the illegal building identification result of the target image is determined according to feature fusion results at at least two scales.

For example, the step in which feature fusion is performed on the target building features and the reference building features at each scale may be that: a difference between the target building features and the reference building features under each scale is calculated , and the difference is taken as a feature fusion result under the scale.

It is to be noted that the difference between the target building features and the reference building features at each scale is calculated, and the difference is taken as a feature fusion result at the scale, so that the difference between the target image and the reference image at the scale can be highlighted and reference information can be richer and more comprehensive by referring to the difference between the target image and the reference image at each scale when the illegal building identification result of the target image is determined according to the feature fusion results at at least two scales, thereby improving the accuracy of the illegal building identification results.

In the embodiment of the present application, the building feature extraction process of the target image and the reference image is refined into the operations of extracting the basis features of the target image and the basis features of the reference image, respectively, and performing multi-scale feature extraction on the basis features to obtain the building features, so that the illegal building identification result of the target image is determined based on the multi-scale target building features and reference building features, thereby improving the accuracy and richness of the extracted building features, improving the characterization ability of the building features, and further improving the accuracy of the illegal building identification results.

### Embodiment three

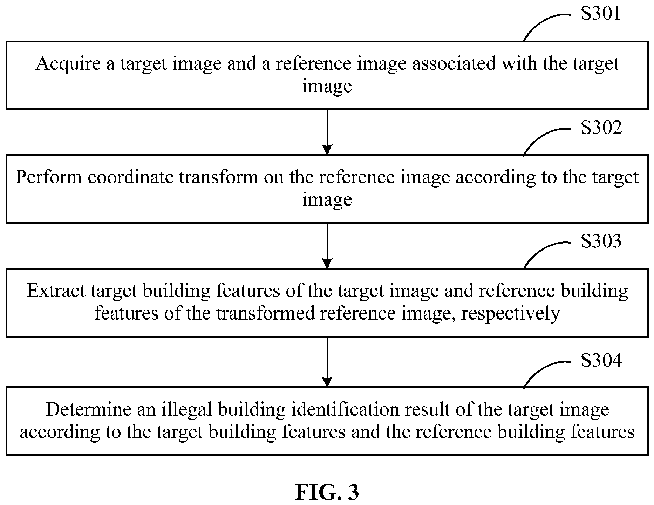

FIG. 3 is a flowchart of an illegal building identification method according to Embodiment three of the present application. The embodiment of the present application is optimized on the basis of the technical schemes of the preceding embodiments.

In an embodiment, before the operation of "extracting the reference building features of the reference image", there is an additional operation of "performing coordinate transform on the reference image according to the target image, where the coordinate transform includes at least one of shrinking transform, stretching transform, rotation transform or translation transform", so that the coordinates of the target image match with the coordinates of the reference image.

As shown in FIG. 3, the illegal building identification method includes the steps described below.

In step S301, a target image and a reference image associated with the target image are acquired.

In step S302, coordinate transform is performed on the reference image according to the target image.

The coordinate transform includes at least one of shrinking transform, stretching transform, rotation transform or translation transform.

In the process of acquiring the target image and the reference image, the case in which the coordinates of the target image may not match with the coordinates of the reference image due to the difference of the acquisition parameters of the acquisition devices such as the acquisition positions and the acquisition angles of the acquisition devices may occur. The mismatching between the coordinates of the target image and the coordinates of the reference image has a certain impact on the accuracy of the illegal building identification result of the target image.

In order to ensure the accuracy of the illegal building identification result, before the feature extraction is performed on the reference image, the coordinate transform is required to be performed on the reference image according to the target image, so as to enable the coordinates of the reference image to match with the coordinates of the target image.

In an embodiment, target orientation features of the target image and the reference orientation features of the reference image may be extracted by using a machine learning model, respectively; the deformation of the reference image relative to the target image is determined according to the matching of the target orientation features and the reference orientation features; and the reference image is adjusted according to the deformation to enable the coordinates of the adjusted reference image to match with the coordinates of the target image.

For example, target key points and target descriptors of the target image and reference key points and reference descriptors of the reference image are extracted, respectively; a matching operation is performed on the target key points and the reference key points according to the target descriptors and the reference descriptors; and a transform matrix is determined according to a matching result, and the coordinate transform is performed on the reference image according to the transform matrix.

For example, the key point and descriptor extraction is performed on the target image by using the scale-invariant feature transform (SIFT) algorithm to obtain the target key points and the target descriptors, and the key point and descriptor extraction is performed on the reference image by using the SIFT algorithm to obtain the reference key points and the reference descriptors. The matching operation is performed on the target key points and the reference key points by using the K-dimensional tree (KD Tree) according to the matching of the target descriptors and the reference descriptors to obtain initial matching relationships. Invalid initial matching relationships are removed by using the random sample consensus (RANSAC) algorithm to obtain a target matching relationship. A transform matrix between the reference image and the target image is determined according to the target matching relationship. The coordinate transform is performed on the reference image according to the transform matrix to enable the coordinates of the transformed reference image to match with the coordinates of the target image.

In step S303, target building features of the target image and reference building features of the transformed reference image are extracted, respectively.

It is to be noted that the operation of extracting the target building features of the target image may be performed before step S302, after step S303, or simultaneously with step S302, and the embodiment of the present application does not limit the execution sequence of steps S302 and S303.

In step S304, an illegal building identification result of the target image is determined according to the target building features and the reference building features.

In the embodiment of the present application, the coordinate transform is performed on the reference image according to the target image before the reference building features of the reference image are extracted, to enable the coordinates of the reference image to match with the coordinates of the target image, thereby providing a guarantee for the accuracy of the illegal building identification results.

On the basis of the technical scheme of each of the preceding embodiments, in order to eliminate the influence of acquisition parameters such as image size, illumination environment, and acquisition angle on the illegal building identification result, after the target image and the reference image are acquired, the target image and the reference image may be preprocessed before the target image and the reference image are processed.

In an optional implementation of the embodiment of the present application, the target image, or the reference image, or the target image and the reference image are resized so that the size of the target image and the size of the reference image are consistent.

In another optional implementation of the embodiment of the present application, grayscale transform (rgb2gray) is performed on the target image and the reference image to eliminate hue and saturation information of the image while retaining brightness information, thereby achieving the transformation of an RGB (red-green-blue) image or a color image into a grayscale image.

In another optional implementation of the embodiment of the present application, histogram equalization is performed on the target image and the reference image to enhance the image contrast and remove the influence of factors such as illumination.

It is to be noted that when the image is preprocessed by using at least two of the preceding manners, the sequence of preprocessing operations may not be limited.

### Embodiment four

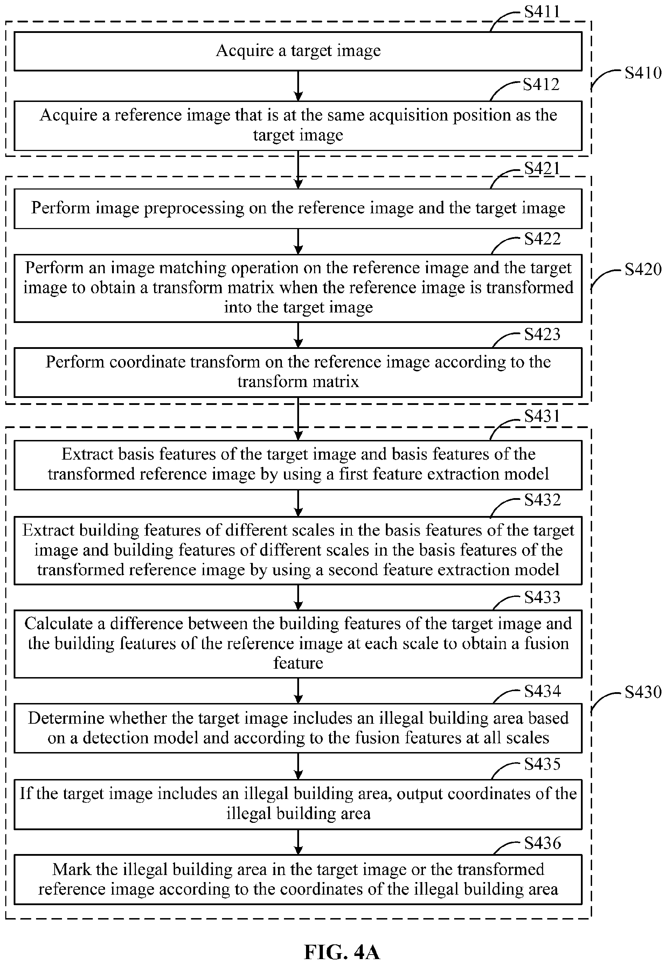

FIG. 4A is a flowchart of an illegal building identification method according to Embodiment four of the present application. The embodiment of the present application is optimized on the basis of the technical schemes of the preceding embodiments.

As shown in FIG. 4A, the illegal building identification method includes steps S410 to S430:
S410, image acquisition;
S420, image matching;
S430, image detection.

The image acquisition process includes the steps described below.

In step S411, a target image is acquired.

In step S412, a reference image that is at the same acquisition position as the target image is acquired.

The target image is an image containing buildings acquired by controlling an unmanned aerial vehicle along a set route and at a set frequency at the current time. The reference image is an image containing buildings acquired by controlling an unmanned aerial vehicle along a set route and at a set frequency at a historical time.

Every time the unmanned aerial vehicle is controlled to acquire images, the image acquisition parameters are consistent. The image acquisition parameters include an acquisition frequency and an acquisition angle. The acquisition route, acquisition frequency, and other acquisition parameters of the unmanned aerial vehicle may be determined by technicians according to requirements or empirical values.

It is to be noted that even if the acquisition parameters of the unmanned aerial vehicle are set consistently in the acquisition process, the case in which the acquisition positions or acquisition angles of the images are inconsistent due to external environment or system errors may also occur. Therefore, it is only necessary to ensure that the distance difference between the acquisition position of the newly acquired target image and the acquisition position of the reference image satisfies a set distance threshold and the angle difference between the acquisition angle of the newly acquired target image and the acquisition angle of the reference image satisfies a set angle threshold. The set distance threshold and the set angle threshold may be determined by technicians according to requirements or empirical values or repeatedly determined by performing a large number of tests.

For example, the resolution of images acquired by the unmanned aerial vehicle is 4000*6000, where the height is 4000 and the width is 6000.

The image matching process includes the steps described below.

In step S421, image preprocessing is performed on the reference image and the target image.

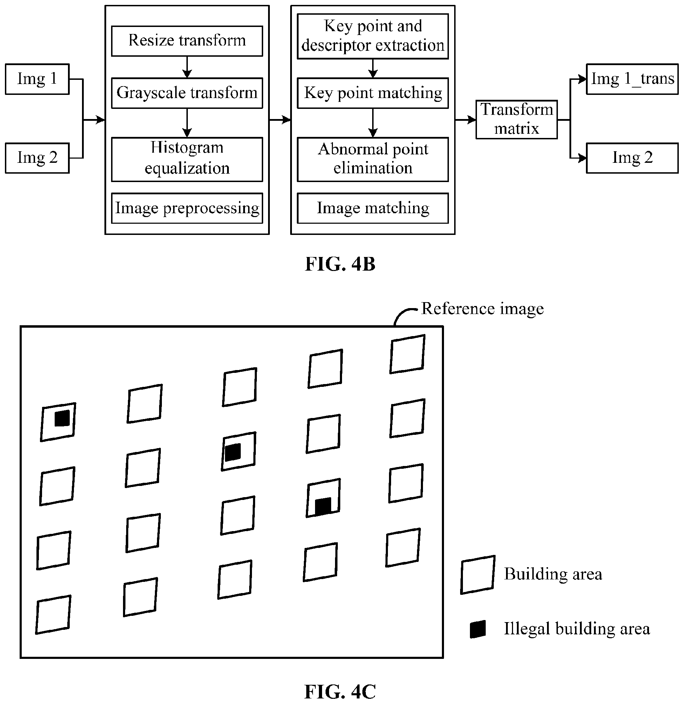

With reference to FIG. 4B which shows a block diagram of an image matching process, the reference image is Img1 and the target image is Img2.

The image preprocessing operation includes resize transform, which is set to resize the reference image and the target image so that the size of the processed target image and the size of the processed reference image are the same. For example, the size is unified as 1000*1500.

The image preprocessing operation further includes grayscale (rgb2gray) transform, which is set to transform the resized reference image and the resized target image from color images into grayscale images.

The image preprocessing operation further includes histogram equalization (EqualizeHist) to eliminate the influence of different acquisition environments such as illumination on the detection result of the target image and the reference image.

In step S422, an image matching operation is performed on the reference image and the target image to obtain a transform matrix when the reference image is transformed into the target image.

The image matching operation includes key point and descriptor extraction, which is set to perform the feature extraction operation on the reference image through the SIFT algorithm to obtain reference key points and reference descriptors of the reference image, and perform the feature extraction operation on the target image through the same algorithm to obtain target key points and target descriptors of the target image.

The image matching operation further includes key point matching, which is set to match the target key points and the reference key points according to the consistency of the reference descriptors and the target descriptors through the KD Tree algorithm to obtain a key point matching result.

The target matching operation further includes abnormal point elimination, which is set to remove invalid matching relationships in the key point matching result through the RANSAC algorithm to obtain the final accurate matching relationships and determine the transform matrix corresponding to the accurate matching relationships.

In step S423, coordinate transform is performed on the reference image according to the transform matrix.

The coordinate transform includes at least one of shrinking transform, stretching transform, rotation transform or translation transform. The coordinates of the transformed reference image are consistent with the coordinates of the target image.

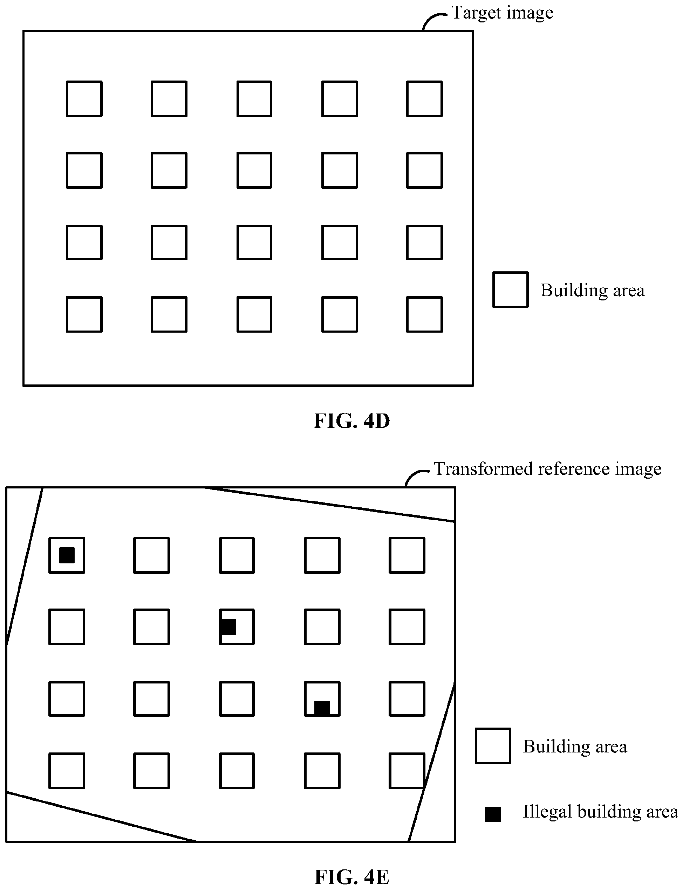

For example, FIGS. 4C and 4D show reference image Img1 and target image Img2, respectively. FIG. 4E shows transformed reference image Img1_trans. With the comparison of FIG. 4E and FIG. 4C, FIG. 4E is obtained by rotating the reference image Img1 in FIG. 4C. It can be seen from the comparison between FIG. 4E and FIG. 4D that the coordinates of the transformed reference image and the target image are consistent.

The image detection process includes the steps described below.

In step S431, basis features of the target image and basis features of the transformed reference image are extracted by using a first feature extraction model.

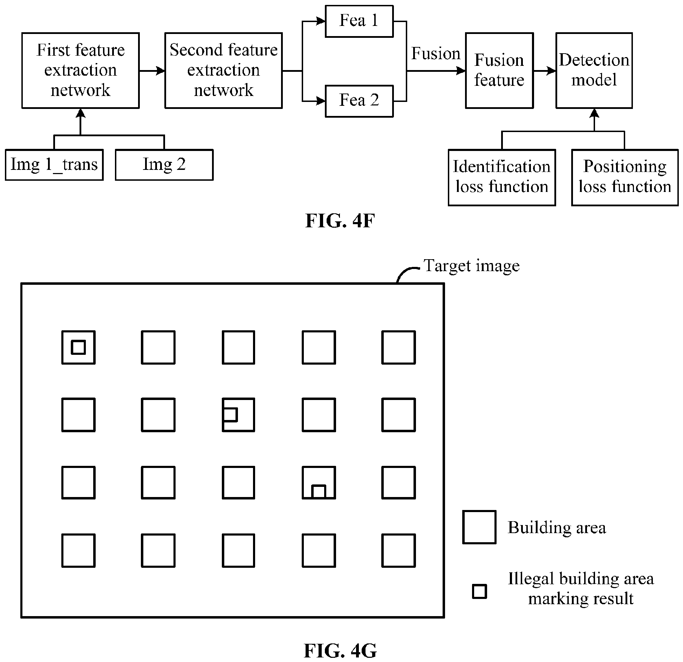

The image detection process is illustrated with reference to the structure block diagram of the image detection process shown in FIG. 4F.

For example, the basis features of the target image and the basis features of the transformed reference image are extracted by using the deep residual network, respectively. The network parameters of the deep residual network used to extract the basis features of the target image are consistent with the network parameters of the deep residual network used to extract the basis features of the transformed reference image. The network depth of the deep residual network may be determined by technicians according to requirements or empirical values or repeatedly determined by performing a large number of tests. For example, the network depth may be 50.

In step S432, building features of different scales in the basis features of the target image and building features of different scales in the basis features of the reference image are extracted by using a second feature extraction model.

For example, the building features of different scales in the basis features of the target image and the building features of different scales in the basis features of the reference image are extracted, respectively, to obtain target building feature Fea1 and reference building feature Fea2.

It is to be understood that since the image acquired by the unmanned aerial vehicle has high resolution and complex content, and the building area is small, has complex and diverse building groups, and is easily interfered by other factors such as pedestrians on the road, building features at different scales are required as the basis for subsequent image detection, thereby improving the accuracy of detection results.

In step S433, a difference between the building features of the target image and the building features of the reference image at each scale is calculated to obtain a fusion feature.

It is to be understood that the target building features and the reference building features at each scale are fused by using the manner of feature subtraction to obtain the fused feature Feature, which can highlight the difference between the target image and the reference image at the same scale and obtain the suspected illegal building area.

It is to be noted that the sequence of the reference image and the target image is not required to be concerned when the difference operation is performed, which improves the generalization ability of the detection model.

In step S434, whether the target image includes an illegal building area is determined based on a detection model and according to the fusion features at all scales.

In step S435, if the target image includes the illegal building area, coordinates of the illegal building area are outputted.

In step S436, the illegal building area is marked in the target image or the transformed reference image according to the coordinates of the illegal building area.

The illegal building area includes at least one illegal building. The illegal building may be color steel plates and scaffoldings added on the basis of existing buildings as well as roof repair, and may also be houses that are built in areas where housing construction is not allowed.

The detection model may be constructed based on a neural network model. In the model training stage of the detection model, an identification loss function Focal loss and a positioning loss function SmoothL1_loss may be introduced, and a network parameter in the detection model may be optimized and adjusted based on the identification loss function and the positioning deviation loss function. The identification loss function is set to characterize a deviation between a classification result outputted by the model and an actual classification result. The positioning loss function is set to characterize a deviation between position coordinates of the illegal building area outputted by the model and actual position coordinates of the illegal building area.

With reference to FIG. 4G which shows a schematic diagram of a marking result, the illegal area is marked in the target image by using a rectangular box.

It is to be understood that the illegal building area is marked in the target image so that the position of the illegal building area can be displayed intuitively, which provides a basis for offline law enforcement officers to perform targeted law enforcement based on the marked illegal building area, thereby reducing the workload of law enforcement officers and improving the identification efficiency of illegal building areas and the accuracy of identification results.

### Embodiment five

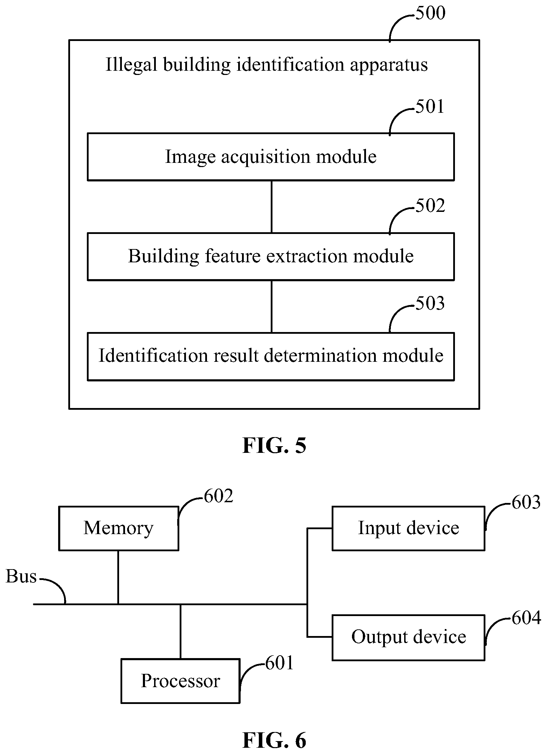

FIG. 5 is a structure diagram of an illegal building identification apparatus according to Embodiment five of the present application. The embodiment of the present application is applicable to the case of identifying illegal buildings in images. The apparatus is implemented by software, or hardware, or software and hardware and is specifically configured in an electronic device.

As shown in FIG. 5, the illegal building identification apparatus 500 includes an image acquisition module 501, a building feature extraction module 502, and an identification result determination module 503.

The image acquisition module 501 is configured to acquire a target image and a reference image associated with the target image.

The building feature extraction module 502 is configured to extract target building features of the target image and reference building features of the reference image, respectively.

The identification result determination module 503 is configured to determine, according to the target building features and the reference building features, an illegal building identification result of the target image.

In the present application, the image acquisition module acquires a target image and a reference image associated with the target image, the building feature extraction module extracts target building features of the target image and reference building features of the reference image, respectively, and the identification result determination module determines an illegal building identification result of the target image according to the target building features and the reference building features. In the preceding technical scheme, the reference image associated with the target image is acquired, the target image and the reference image are bonded to each other, and feature extraction is performed on the bonded images, so as to perform illegal building identification on the target image based on the building features of the reference image, thereby achieving the illegal building automatic identification and reducing the data throughput in the process of illegal building identification. Meanwhile, based on the siamese idea, building feature extraction is performed on the target image and the reference image, and then illegal building identification is performed according to the extracted building features, thereby improving the accuracy of identification results.

In an embodiment, a distance difference between an acquisition position of the target image and an acquisition position of the reference image is less than a set distance threshold, or an angle difference between an acquisition angle of the target image and an acquisition angle of the reference image is less than a set angle threshold, or a distance difference between an acquisition position of the target image and an acquisition position of the reference image is less than a set distance threshold and an angle difference between an acquisition angle of the target image and an acquisition angle of the reference image is less than a set angle threshold.

In an embodiment, the building feature extraction module 502 includes a basis feature extraction unit and a building feature extraction unit.

The basis feature extraction unit is configured to extract target basis features of the target image and reference basis features of the reference image associated with the target image, respectively.

The building feature extraction unit is configured to, perform, at at least two set scales, feature extraction on the target basis features and the reference basis features, respectively, to obtain the target building features and the reference building features at the at least two scales.

In an embodiment, the identification result determination module 503 includes a feature fusion unit and an identification result determination unit.

The feature fusion unit is configured to perform feature fusion on the target building features and the reference building features at each scale.

The identification result determination unit is configured to determine, according to feature fusion results at at least two scales, the illegal building identification result of the target image.

In an embodiment, the feature fusion unit includes a feature fusion subunit.

The feature fusion subunit is configured to calculate a difference between the target building features and the reference building features at each scale, and take the difference as a feature fusion result at the scale.

In an embodiment, the basis feature extraction unit includes a basis feature extraction subunit.

The basis feature extraction subunit is configured to extract, based on a deep residual network, the target basis features of the target image and the reference basis features of the reference image associated with the target image, respectively.

In an embodiment, the apparatus further includes a coordinate transform module, which is configured to: before the reference building features of the reference image are extracted, perform coordinate transform on the reference image according to the target image.

The coordinate transform includes at least one of shrinking transform, stretching transform, rotation transform or translation transform.

In an embodiment, the coordinate transform module includes a key point extraction unit, a key point matching unit, and a coordinate transform unit.

The key point extraction unit, which is configured to extract target key points and target descriptors of the target image and reference key points and reference descriptors of the reference image, respectively.

The key point matching unit is configured to perform a matching operation on the target key points and the reference key points according to the target descriptors and the reference descriptors.

The coordinate transform unit is configured to determine, according to a matching result, a transform matrix, and perform the coordinate transform on the reference image according to the transform matrix.

In an embodiment, the identification result determination module 503 includes an illegal building area determination unit and a position coordinates determination unit.

The illegal building area determination unit is configured to determine, according to the target building features and the reference building features, whether the target image comprises an illegal building area.

The position coordinates determination unit is configured to, if the target image comprises the illegal building area, determine position coordinates of the illegal building area.

The preceding illegal building identification apparatus may execute the illegal building identification method provided by any of the embodiments of the present application and has functional modules for and beneficial effects of executing the illegal building identification method.

### Embodiment six

According to the embodiment of the present application, the present application further provides an electronic device and a readable storage medium.

FIG. 6 is a block diagram of an electronic device for implementing an illegal building identification method in an embodiment of the present application. The electronic device is intended to represent each form of digital computer, for example, a laptop computer, a desktop computer, a worktable, a personal digital assistant, a server, a blade server, a mainframe computer or another applicable computer. The electronic device may also represent each form of mobile device, for example, a personal digital assistant, a cellphone, a smartphone, a wearable device or another similar computing device. Herein the shown components, the connections and relationships between these components, and the functions of these components are illustrative only and are not intended to limit the implementation of the present application as described or claimed herein.

As shown in FIG. 6, the electronic device includes one or more processors 601, a memory 602, and interfaces for connecting components, including a high-speed interface and a low-speed interface. The components are interconnected to each other by different buses and may be mounted on a common mainboard or in other manners as desired. The processor may process instructions executed in the electronic device, including instructions stored in or on the memory to make graphic information of a graphical user interface (GUI) displayed on an external input/output device (for example, a display device coupled to an interface). In other implementations, if required, multiple processors, or multiple buses, or multiple processors and multiple buses may be used with multiple memories. Similarly, multiple electronic devices may be connected, each providing some necessary operations (for example, serving as a server array, a set of blade servers or a multi-processor system). FIG. 6 shows one processor 601 by way of example.

The memory 602 is the non-transitory computer-readable storage medium provided in the present application. The memory has instructions executable by at least one processor stored thereon to cause the at least one processor to perform the illegal building identification method provided in the present application. The non-transitory computer-readable storage medium of the present application stores computer instructions for causing a computer to perform the illegal building identification method provided in the present application.

The memory 602 as a non-transitory computer-readable storage medium is configured to store a non-transitory software program, a non-transitory computer-executable program and modules, for example, program instructions/modules (for example, the image acquisition module 501, the building feature extraction module 502, and the identification result determination module 503 shown in FIG. 5) corresponding to the illegal building identification method provided in the embodiments of the present application. The processor 601 executes non-transitory software programs, instructions and modules stored in the memory 602 to execute the each function application and data processing of a server, that is, implement the illegal building identification method provided in the preceding method embodiments.

The memory 602 may include a program storage region and a data storage region. The program storage region may store an operating system and an application program required by at least one function. The data storage region may store data created based on the use of the electronic device for performing the illegal building identification method. Additionally, the memory 602 may include a high-speed random-access memory and a non-transient memory, for example, at least one disk memory, a flash memory or another non-transient solid-state memory. In some embodiments, the memory 602 optionally includes memories disposed remote from the processor 601, and these remote memories may be connected, through a network, to the electronic device for performing the illegal building identification method. Examples of the preceding network include, but are not limited to, the Internet, an intranet, a local area network, a mobile communication network and a combination thereof.

The electronic device for performing the illegal building identification method may further include an input device 603 and an output device 604. The processor 601, the memory 602, the input device 603, and the output device 604 may be connected by a bus or in other manners. FIG. 6 uses connection by a bus as an example.

The input device 603 may receive input number or character information and generate key signal input related to user settings and function control of the electronic device for performing the illegal building identification method. The input device 603 may be, for example, a touchscreen, a keypad, a mouse, a trackpad, a touchpad, a pointing stick, one or more mouse buttons, a trackball or a joystick. The output device 604 may include, for example, a display device, an auxiliary lighting device (for example, a light-emitting diode (LED)) or a haptic feedback device (for example, a vibration motor). The display device may include, but is not limited to, a liquid-crystal display (LCD), an LED display, and a plasma display. In some implementations, the display device may be a touchscreen.

Each implementation of the systems and techniques described herein may be implemented in digital electronic circuitry, integrated circuitry, an application-specific integrated circuit (ASIC), computer hardware, firmware, software or a combination thereof. Each implementation may include implementations in one or more computer programs. The one or more computer programs may be executable, or interpretable, or executable and interpretable on a programmable system including at least one programmable processor. The programmable processor may be a dedicated or general-purpose programmable processor for receiving data and instructions from a memory system, at least one input device and at least one output device and transmitting data and instructions to the memory system, the at least one input device and the at least one output device.

These computing programs (also referred to as programs, software, software applications or codes) include machine instructions of a programmable processor. These computing programs may be implemented in a high-level procedural or object-oriented programming language or in an assembly/machine language. As used herein, the terms "machine-readable medium" and "computer-readable medium" refer to any computer program product, device or apparatus (for example, a magnetic disk, an optical disk, a memory or a programmable logic device (PLD)) for providing machine instructions and/or data for a programmable processor, including a machine-readable medium for receiving machine instructions as machine-readable signals. The term "machine-readable signal" refers to any signal used in providing machine instructions or data for a programmable processor.

In order to provide the interaction with a user, the systems and techniques described herein may be implemented on a computer. The computer has a display device (for example, a cathode-ray tube (CRT) or an LCD monitor) for displaying information to the user and a keyboard and a pointing device (for example, a mouse or a trackball) through which the user may provide input to the computer. Other types of devices may also be configured to provide interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, serving as a data server), a computing system including a middleware component (for example, an application server), a computing system including a front-end component (for example, a user computer having a graphical user interface or a web browser through which a user may interact with implementations of the systems and techniques described herein) or a computing system including any combination of such back-end, middleware or front-end components. Components of a system may be interconnected by any form or medium of digital data communication (for example, a communication network). Examples of the communication network include a local area network (LAN), a wide area network (WAN), the Internet, and a blockchain network.

The computing system may include clients and servers. A client and a server are generally remote from each other and typically interact through a communication network. The relationship between the client and the server arises by virtue of computer programs running on respective computers and having a client-server relationship to each other.

In the present application, a target image and a reference image associated with the target image are acquired, target building features of the target image and reference building features of the reference image are extracted, respectively, and an illegal building identification result of the target image is determined according to the target building features and reference building features. In the preceding technical scheme, the reference image associated with the target image is acquired, the target image and the reference image are bonded to each other, and feature extraction is performed on the bonded images, so as to perform illegal building identification on the target image based on the building features of the reference image, thereby achieving the illegal building automatic identification and reducing the data throughput in the process of illegal building identification. Meanwhile, based on the siamese idea, building feature extraction is performed on the target image and the reference image, and then illegal building identification is performed according to the extracted building features, thereby improving the accuracy of identification results.

It is to be understood that the preceding flow in each form may be used, with steps reordered, added or removed. For example, the steps described in the present application may be executed in parallel, in sequence or in a different order as long as the desired results of the technical schemes disclosed in the present application can be achieved. The execution sequence of these steps is not limited herein.

The scope of the present application is not limited to the preceding implementations. It is to be understood by those skilled in the art that modifications, combinations, subcombinations, and substitutions may be made depending on design requirements and other factors. Any modification, equivalent substitution, improvement and the like made within the spirit and principle of the present application is within the scope of the present application.

## Claims

1. An illegal building identification method, comprising:
acquiring a target image and a reference image associated with the target image;
extracting a target building feature of the target image and a reference building feature of the reference image, respectively; and
determining, according to the target building feature and the reference building feature, an illegal building identification result of the target image.

2. The method according to claim 1, wherein a distance difference between an acquisition position of the target image and an acquisition position of the reference image is less than a set distance threshold; or an angle difference between an acquisition angle of the target image and an acquisition angle of the reference image is less than a set angle threshold; or a distance difference between an acquisition position of the target image and an acquisition position of the reference image is less than a set distance threshold and an angle difference between an acquisition angle of the target image and an acquisition angle of the reference image is less than a set angle threshold.

3. The method according to claim 1, wherein extracting the target building feature of the target image and the reference building feature of the reference image associated with the target image, respectively, comprises:
extracting a target basis feature of the target image and a reference basis feature of the reference image associated with the target image, respectively; and
performing, at each of at least two set scales, feature extraction on the target basis feature and the reference basis feature, respectively, to obtain a target building feature and a reference building feature at each of the at least two scales.

4. The method according to claim 3, wherein determining, according to the target building feature and the reference building feature, the illegal building identification result of the target image comprises:
performing feature fusion on the target building feature and the reference building feature at each of the at least two scales; and
determining, according to feature fusion results at the at least two scales, the illegal building identification result of the target image.

5. The method according to claim 4, wherein performing the feature fusion on the target building feature and the reference building feature at each of the at least two scales comprises:
calculating a difference between the target building feature and the reference building feature at each of the at least two scales, and taking the difference as a feature fusion result at the each of the at least two scales.

6. The method according to claim 3, wherein extracting the target basis feature of the target image and the reference basis feature of the reference image associated with the target image, respectively, comprises:
extracting, based on a deep residual network, the target basis feature of the target image and the reference basis feature of the reference image associated with the target image, respectively.

7. The method according to any one of claims 1 to 6, before extracting the reference building feature of the reference image, further comprising:
performing coordinate transform on the reference image according to the target image;
wherein the coordinate transform comprises at least one of shrinking transform, stretching transform, rotation transform or translation transform.

8. The method according to claim 7, wherein performing the coordinate transform on the reference image according to the target image comprises:
extracting target key points and target descriptors of the target image, and reference key points and reference descriptors of the reference image, respectively;
performing a matching operation on the target key points and the reference key points according to the target descriptors and the reference descriptors; and
determining, according to a matching result, a transform matrix, and performing the coordinate transform on the reference image according to the transform matrix.

9. The method according to claim 1, wherein determining the illegal building identification result of the target image comprises:
determining whether the target image comprises an illegal building area; and
in response to determining that the target image comprises the illegal building area, determining position coordinates of the illegal building area.

10. An illegal building identification apparatus, comprising:
an image acquisition module, which is configured to acquire a target image and a reference image associated with the target image;
a building feature extraction module, which is configured to extract a target building feature of the target image and a reference building feature of the reference image, respectively; and
an identification result determination module, which is configured to determine, according to the target building feature and the reference building feature, an illegal building identification result of the target image.

11. The apparatus according to claim 10, wherein a distance difference between an acquisition position of the target image and an acquisition position of the reference image is less than a set distance threshold; or an angle difference between an acquisition angle of the target image and an acquisition angle of the reference image is less than a set angle threshold; or a distance difference between an acquisition position of the target image and an acquisition position of the reference image is less than a set distance threshold and an angle difference between an acquisition angle of the target image and an acquisition angle of the reference image is less than a set angle threshold.

12. The apparatus according to claim 10, wherein the building feature extraction module comprises:
a basis feature extraction unit, which is configured to extract a target basis feature of the target image and a reference basis feature of the reference image associated with the target image, respectively; and
a building feature extraction unit, which is configured to, perform, at each of at least two set scales, feature extraction on the target basis feature and the reference basis feature, respectively, to obtain a target building feature and a reference building feature at each of the at least two scales.

13. The apparatus according to claim 12, wherein the identification result determination module comprises:
a feature fusion unit, which is configured to perform feature fusion on the target building feature and the reference building feature at each of the at least two scales; and
an identification result determination unit, which is configured to determine, according to feature fusion results at the at least two scales, the illegal building identification result of the target image.

14. The apparatus according to claim 13, wherein the feature fusion unit comprises:
a feature fusion subunit, which is configured to calculate a difference between the target building feature and the reference building feature at each of the at least two scales, and take the difference as a feature fusion result at the each of the at least two scales.

15. The apparatus according to claim 12, wherein the basis feature extraction unit comprises:
a basis feature extraction subunit, which is configured to extract, based on a deep residual network, the target basis feature of the target image and the reference basis feature of the reference image associated with the target image, respectively.

16. The apparatus according to any one of claims 10 to 15, further comprising:
a coordinate transform module, which is configured to, before extracting the reference building feature of the reference image, perform coordinate transform on the reference image according to the target image;
wherein the coordinate transform comprises at least one of shrinking transform, stretching transform, rotation transform or translation transform.

17. The apparatus according to claim 16, wherein the coordinate transform module comprises:
a key point extraction unit, which is configured to extract target key points and target descriptors of the target image, and reference key points and reference descriptors of the reference image, respectively;
a key point matching unit, which is configured to perform a matching operation on the target key points and the reference key points according to the target descriptors and the reference descriptors; and
a coordinate transform unit, which is configured to determine, according to a matching result, a transform matrix, and perform the coordinate transform on the reference image according to the transform matrix.

18. The apparatus according to claim 10, wherein the identification result determination module comprises:
an illegal building area determination unit, which is configured to determine, according to the target building feature and the reference building feature, whether the target image comprises an illegal building area; and
a position coordinates determination unit, which is configured to, in response to determining that the target image comprises an illegal building area, determine position coordinates of the illegal building area.

19. An electronic device, comprising:
at least one processor; and
a memory communicatively connected to the at least one processor;
wherein the memory has instructions executable by the at least one processor stored thereon, wherein the instructions are executed by the at least one processor to cause the at least one processor to perform the illegal building identification method according to any one of claims 1 to 9.

20. A non-transitory computer-readable storage medium having computer instructions stored thereon, wherein the computer instructions are configured to cause a computer to perform the illegal building identification method according to any one of claims 1 to 9.
